# EUROPEAN PATENT SPECIFICATION

(11) **EP 4 018 755 B1**
(45) Date of publication and mention of the grant of the patent: **12.03.2025**
(21) Application number: 20764887.4
(22) Date of filing: 19.08.2020
(51) Int. Cl.: H04W 72/23, H04L 5/14, H04W 72/12, H04W 84/12, H04B 7/0452

(54) **BI-DIRECTIONAL AND FULL-DUPLEX COMMUNICATION**
BIDIREKTIONALE UND VOLLDUPLEX-KOMMUNIKATION
COMMUNICATION BIDIRECTIONNELLE ET EN DUPLEX INTÉGRAL

(30) Priority: 23.08.2019 US 201916550080
(43) Date of publication of application: 29.06.2022
(73) Proprietor: Cisco Technology, Inc., San Jose, California 95134-1706 (US)
(72) Inventor: TANEJA, Mukesh, Bangalore 560037 (IN); HART, Brian D., Sunnyvale, California 94087 (US)
(74) Representative: Kilburn & Strode LLP
(86) International application number: PCT/US2020/046979
(87) International publication number: WO 2021/041112

(56) References cited:
- US-A1- 2018 097 605
- US-A1- 2019 182 018
- KAPSEOK CHANG (ETRI): "In-band Full Duplex Radios and System Performance ; 11-15-0043-01-00ax-in-band-full-duplex-radios-and-system-performance", IEEE DRAFT; 11-15-0043-01-00AX-IN-BAND-FULL-DUPLEX-RADIOS-AND-SYSTEM-PERFORMANCE, IEEE-SA MENTOR, PISCATAWAY, NJ USA, vol. 802.11ax, no. 1, 12 January 2015 (2015-01-12), pages 1 - 36, XP068082557

## Description

### TECHNICAL FIELD

Embodiments presented in this disclosure generally relate to wireless transmission management. More specifically, embodiments disclosed herein relate to managing the assignment of Resource Units (RU) for enabling half-duplex, dual-half-duplex, and full-duplex mobile stations to communicate with an Access Point (AP).

### BACKGROUND

When multiple devices within communications range of one another wirelessly communicate, the signals may be separated in time and/or frequency to allow receiving devices to differentiate individual communications. For example, the available frequencies for communications between two devices may be divided into several channels so that the two devices may transmit data at the same time in different portions of the available frequency range, and the receiving devices can identify an individual communication by filtering out data carried in undesired frequencies of the range. In another example, two devices may communicate in a shared frequency range by specifying various times that are reserved for particular communications, so that a first communication is sent during a first time window (and not during a second time window), and a second communication is sent during a second time window (and not during the first time window), so that a receiving device can identify an individual communication based on an associated time window.

US 2019/182018 A1 describes, according to its abstract, a method including: obtaining, by an access point AP, use permission of a channel; determining, by the AP after obtaining the use permission of the channel, scheduling information for a station STA participating in full-duplex transmission, where the scheduling information includes information about a first station that performs uplink transmission on the channel and information about a second station that performs downlink transmission on the channel at the same time, or the scheduling information includes information about a third station that simultaneously performs uplink and downlink transmission on the channel; and sending, by the AP, a trigger frame, where the trigger frame includes the scheduling information.

### BRIEF DESCRIPTION OF THE DRAWINGS

So that the manner in which the above-recited features of the present disclosure can be understood in detail, a more particular description of the disclosure, briefly summarized above, may be had by reference to embodiments, some of which are illustrated in the appended drawings. It is to be noted, however, that the appended drawings illustrate typical embodiments and are therefore not to be considered limiting; other equally effective embodiments are contemplated.
Figure 1 illustrates a shared communications environment, according to embodiments of the present disclosure.
Figure 2 illustrates a Transmission Opportunity, according to embodiments of the present disclosure.
Figure 3 is a flowchart of a method for an access point to manage communications with stations, according to embodiments of the present disclosure.
Figure 4 is a flowchart of a method for half-duplex or dual-half-duplex communications from a station to an access point, according to embodiments of the present disclosure.
Figure 5 is a flowchart of a method for full-duplex communications from a station to an access point, according to embodiments of the present disclosure.
Figures 6A and 6B illustrate timing charts of various communications within a Transmit Opportunity between access points and stations, according to embodiments of the present disclosure.
Figure 7 is a flowchart of a method for quality of service rescheduling via full-duplex communications, according to embodiments of the present disclosure.
Figure 8 is a flowchart of a method for interference pathway identification for resource unit allocation, according to embodiments of the present disclosure.
Figure 9 illustrates a computing device, according to embodiments of the present disclosure.

To facilitate understanding, identical reference numerals have been used, where possible, to designate identical elements that are common to the figures. It is contemplated that elements disclosed in one embodiment may be beneficially used in other embodiments without specific recitation.

### DESCRIPTION OF EXAMPLE EMBODIMENTS

### OVERVIEW

The invention to which the present European patent relates is defined in the appended independent claims. Further optional features are defined in the appended dependent claims.

One example useful for
understanding the invention presented in this disclosure provides a method, including: allocating a plurality of Resource Units (RU) to a plurality of connected Stations (STAs) based on communications capabilities and traffic requests corresponding to the plurality of connected STAs, wherein a first RU of the plurality of RUs is allocated to a first STA of the plurality of connected STAs as a bidirectional (BD) RU for full-duplex communications with the first STA; transmitting a generalized-trigger to the plurality of connected STAs to assign the plurality of RUs; transmitting downlink (DL) communications on DL RUs of the plurality RUs and the BD RU; and receiving uplink (UL) communications on UL RUs of the plurality of RUs and the BD RU.

One example useful for
understanding the invention presented in this disclosure provides a method, comprising: receiving an assignment of a Resource Unit (RU) for a STA indicating a time window and a frequency band for full-duplex communication between the STA and an Access Point (AP); receiving a downlink message from the AP over the frequency band of the RU during the time window; in response to waiting a predefined amount of time after beginning to receive the downlink message from the AP, transmitting an uplink message to the AP from the STA over the frequency band during a portion of the time window; and during the portion of the time window in which the uplink message is transmitted, applying, by the STA, self interference cancellation to the downlink message based on the uplink message.

One example useful for
understanding the invention presented in this disclosure provides a computer readable storage medium, including instructions that when performed by a processor of a computing device enable the computing device to: allocate a plurality of Resource Units (RU) to a plurality of connected Stations (STAs) based on communications capabilities and traffic requests corresponding to the plurality of connected STAs, wherein a first RU of the plurality of RUs is allocated to a first STA of the plurality of connected STAs as a bidirectional (BD) RU for full-duplex communications with the first STA; transmit a generalized-trigger to the plurality of connected STAs to assign the plurality of RUs; transmit downlink (DL) communications on DL RUs of the plurality RUs and the BD RU; and receive uplink (UL) communications on UL RUs of the plurality of RUs and the BD RU.

### EXAMPLE EMBODIMENTS

When communicating between devices, the devices may transmit messages on different channels and/or at different times to avoid collisions or interference between devices. In many wireless communications environments, such as in Wi-Fi networks (e.g., using the 802.11 family of standards maintained by the IEEE (Institute of Electrical and Electronics Engineers)), the individual devices in the environment may operate using different schemas or versions of the standards available. For example, a first device may use an older or more basic version of IEEE 802.11 (due to software or hardware constraints), whereas a second device may use a newer version (for example, a version of 802.11 with the features described herein) or more complete version of IEEE 802.11, which offers different or additional features for communications. The present disclosure provides for mixed duplex communications among several devices, which may be using different communication standards in a shared communications environment, to enable full-duplex communications in the environment with support for legacy devices. Depending on the capabilities of the remote devices, the congestion of the signaling environment, and the needs of the remote devices, an Access Point assigns various segments of time on specific frequencies bands for communicating with selected remote devices. These time and frequency segments can be designated for uploading messages, downloading messages, or both uploading and downloading messages. The Access Point manages which segments are assigned to which devices, and manages the timing of individual transmissions within those segments to allow for error correction or signal spacing to mitigate interference.

As will be appreciated, the present disclosure references various standards, including IEEE 802.11ax, in non-limiting examples to provide context of the operations of the systems and methods disclosed herein. Accordingly, one of ordinary skill in the art will appreciate that earlier, later, and derivative (e.g., branch, experimental, proprietary) versions of the recited standards as well as unrelated or future communications standards with similar use cases may also employ the teachings provided herein.

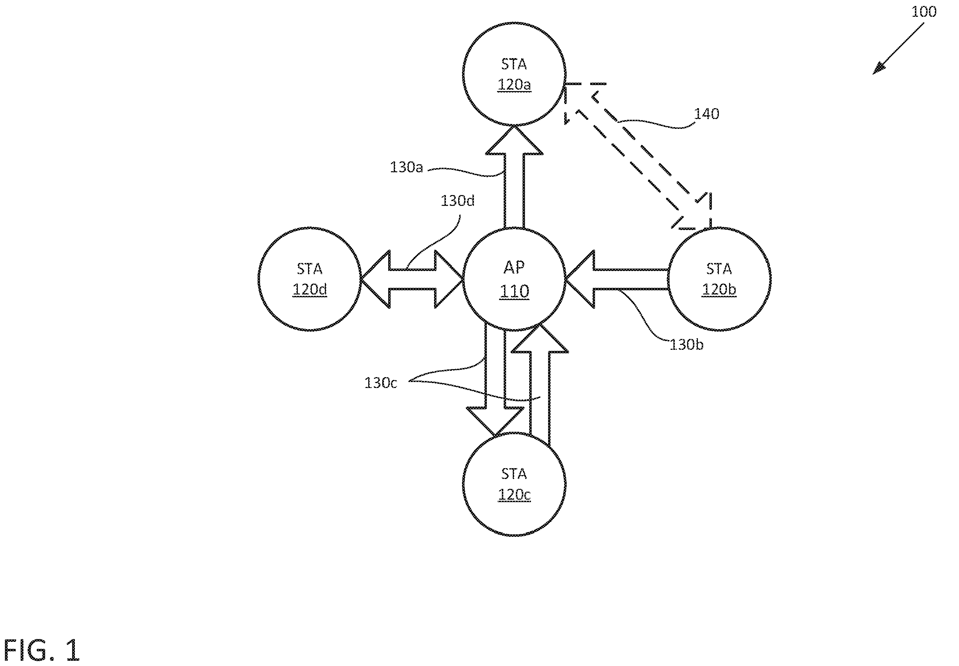

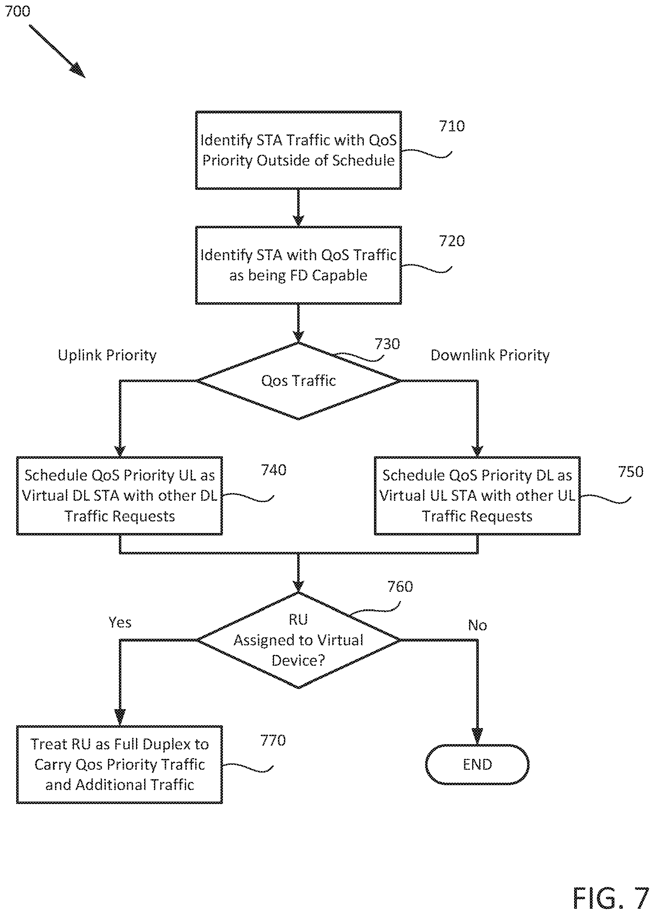

Figure 1 illustrates a shared communications environment 100 in which an Access Point (AP) 110 is in communication with four stations (STA) 120a-d (generally, STA 120). An AP 110 may be a computing device, such as a wireless router, that provides a communications hub to various computing devices (i.e., the STA 120) in the communication environment 100 according to one or more communications standards and the capabilities of the connected computing devices. The STAs 120 may be mobile or stationary computing devices (e.g., laptops, desktops, tablets, cellphones, etc.) that may selectively join or leave a Wireless Local Area Network (WLAN) provided by the AP 110. The hardware of an AP 110 or an STA 120 is discussed in greater detail herein in regard to Figure 7.

Several mobile or stationary computing devices, referred to as STAs 120, may be served by one AP 110 as a communications hub that controls what channels and/or time windows are assigned to a given STA 120 for various traffic requests. As used herein, a Resource Unit (RU) describes the assigned channel and time window for a given STA 120 in a shared communications environment 100. Individual communications sent from an STA 120 to the AP 110 may be referred to as uplinks, uploads, up-communications, or the like. Individual communications sent from the AP 110 to a STA 120 may be referred to as downlinks, downloads, down-communications, or the like. A given RU may be used for Uplinks (UL) to communicate from an STA 120 to the AP 110, for Downlinks (DL) to communicate from the AP 110 to the STA 120, or both. The STAs 120a-d are provided to illustrate different communications modes 130a-d (generally, mode 130) available with the AP 110. The AP 110 assigns different RUs to different STAs 120 based on the communications capabilities and needs of the individual devices, the number of individual devices, communications standards and hardware used by the individual devices, network policies, available spectrum, and potential interference pathways 140. Each of the communication modes 130 represents an RU assignment within a given Physical Layer Convergence Procedure (PLCP) Protocol Data Unit (PDU) (a PLCP PDU may also be referred to as a PPDU) assigned for an STA 120. In various embodiments, different RU assignments to more or fewer STAs 120 using more or fewer RUs in different modes are contemplated. Accordingly, the communication modes 130 shown in Figure 1 represent one RU assignment at a given time, and different assignments may be used at different times. The RU term used herein includes the RU defined in 802.11ax, but is not intended to exclude other embodiments that confine the transmitted power to a subset of the frequency domain.

In the illustrated RU assignment, the first STA 120a is assigned a DL RU, which the AP 110 uses to download data to the first STA 120a via a DL mode 130a. The second STA 120b is assigned a UL RU, which the second STA 120b uses to upload data to the AP 110 via a UL mode 130b. The third STA 120c is assigned two RUs - one UL RU and one DL RU - that the third STA 120c and the AP 110 respectively use to transmit data to the other within the same time period, but on different RU via a dual half-duplex mode 130c. The fourth STA 120d is assigned one bidirectional (BD) RU that is used for both UL and DL during the same time period, allowing the fourth STA 120d to be in full-duplex mode 130d with the AP 110; providing concurrent UL and DL communications on a single channel. Accordingly, an STA 120 assigned solely UL RUs or solely DL RUs may be referred to as being in half-duplex communication with the AP 110, an STA 120 assigned at least one UL RU and at least one DL RU may be referred to as being in dual half-duplex communication with the AP 110, and an STA 120 with at least one BD RU may be referred to as being in full-duplex communication with the AP 110.

At a different time, the AP 110 may reassign the STAs 120 different types or numbers of RUs, which affect the communication mode 130 of the associated STA 120. For example, at a later time, the AP 110 may assign the first STA 120a a UL RU to place the first STA 120a in UL mode 130b. In another example, the AP 110 may assign the third STA 120c one UL RU and one DL RU to remain in dual half-duplex mode 130c. In yet another example, the AP 110 may assign the third STA 120c two DL RUs in one time period to be in downlink communication mode 130a via two channels. In a further example, the AP 110 may assign the fourth STA 120d two RUs, one BD and one UL, to place the fourth STA 120d in full-duplex mode 130d. Accordingly, the AP 110 may assign one or more RUs to each STA 120 in a given PPDU, and depending on the DL, UL, or BD assignment of the RU, the communications mode 130 of the STA 120 may be different in any given PPDU than a prior or subsequent PPDU. When at least one RU is used for bidirectional communications, the STA 120 is considered to be in full-duplex mode 130d, regardless of the assignment of the other RUs for that STA 120.

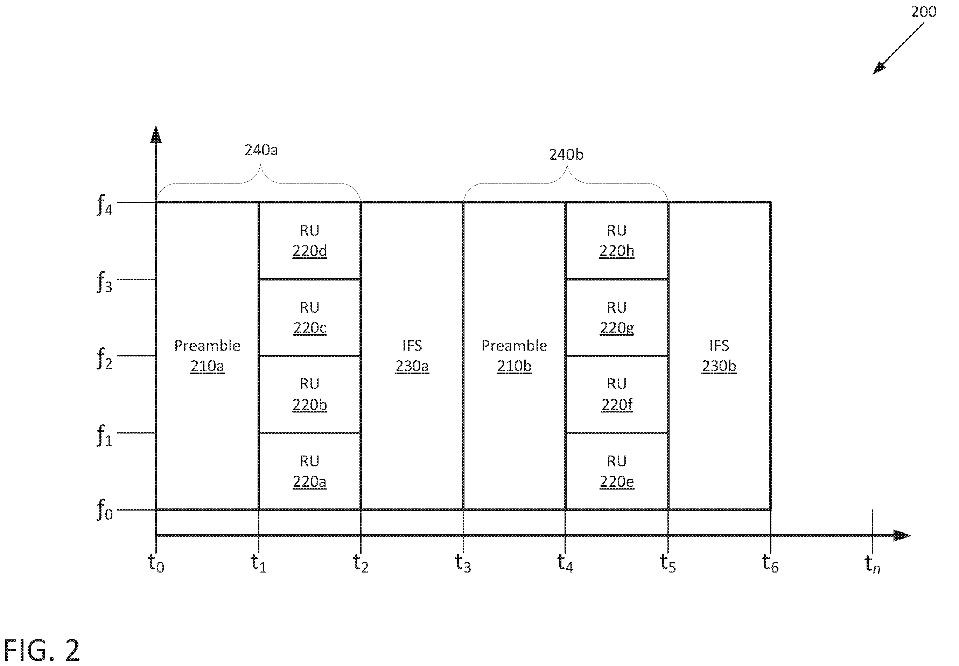

Figure 2 illustrates a Transmit Opportunity (TXOP) 200, including two PPDUs 240, according to embodiments of the present disclosure. In a time and frequency (or wavelength) divided multiplexed communication environment, different frequency bands are used during different time periods for specific purposes. As illustrated, a first PPDU 240a (generally, PPDU 240) occupies a first time division from t₀-t₂ ,and a second PPDU 240b occupies a second time division from t₃-t₅.

In the first PPDU 240a, a first time period from times t₀-t₁ is reserved for a first preamble 210a (generally, preamble 210) or other broadcast related content across the available spectrum from frequencies f₀ to f₄. In a second time period from time t₁-t₂, four RUs 220a-d (generally, RU 220) are assigned in different frequency divisions (e.g., f₀-f₁, f₁-f₂, f₂-f₂, and f₃-f₄) of the available spectrum. Each RU 220 may be assigned to one or more different STAs 120 for uplink, downlink, or bi-directional communications. The third time period from t₂-t₃ is reserved for a first inter-frame space (IFS) 230a (generally, IFS 230). The IFS 230 may include Short Inter-frame Spaces, (SIFS), Distributed Coordination Function (DCF) Inter-frame Spaces, (DIFS), Arbitration Inter-frame Spaces (AIFS), and the like which provide a period of time for the various devices (i.e., the AP 110 and STAs 120) to process the associated PPDU 240 before sending or receiving a subsequent PPDU 240, or to perform network optimization and management tasks.

The second PPDU 240b includes an associated second preamble 210b, second set of RUs 220e-h, and second IFS 230b, and subsequent PPDUs 240 include similar associated elements. The RUs 220e-h in the second PPDU 240b, however, are not necessarily assigned for the same mode of communication (i.e., UL, DL or BD) or STA 120 as the RUs 220a-d in the corresponding frequency band from the first PPDU 240a. For example, in the frequency division of f₀-f₁, the AP 110 may assign the first RU 220a for a DL mode 130a to a first STA 110a, and the fifth RU 220e for a UL mode 130b to the first STA 120a. Continuing the example, the AP 110 may assign a second STA 120b the second RU 220b for an UL mode 130b and the eighth RU 220h for a UL mode 130b. The AP 110 may assign no RUs 220 to a third STA 120c from the first PPDU 240a, but the fifth RU 220f from the second PPDU 240b. The AP may also assign a fourth STA 120d the third RU 220c and the fourth RU 220d for UL and DL respectively to operate in dual half-duplex mode 130c during the first PPDU 240a, and the seventh RU 220g to operate in full-duplex mode 130d during the second PPDU 240b.

In some embodiments, the AP 110 organizes transmissions into a two-PPDU set, in which the RUs 220 of the first PPDU 240a are primarily used for uplink communications, and in which the RUs 220 of the second PPDU 240b are primarily used for downlink communications. In such embodiments, the AP 110 assigns a given RU 220 in a given PPDU 240 for the opposite downlink/uplink classification by treating the given RU 220 as a BD RU 220. The given STA 120 in this example may use the reassigned BD RU 220 for one of UL, DL, or BD communications depending on the data queued on the given STA 120. This reassignment allows the associated STA 120, if capable, to transmit or receive high-priority data out of sequence, or at a higher data rate, while allowing other STAs 120 to process data at a different standardized rate.

As will be appreciated, different communications standards impose different timing and frequency requirements, and Figure 2 is provided to illustrate concepts of the present disclosure that are generally applicable across standards and use cases. In practice, the frequency bands and time periods used by APs 110 and STAs 120 may be unevenly spaced, include gaps between time periods, include padding between frequency bands, include additional PPDU elements (e.g., acknowledgment messages, clear to send messages), include unassigned RUs 220, include more or fewer RUs 220, etc.

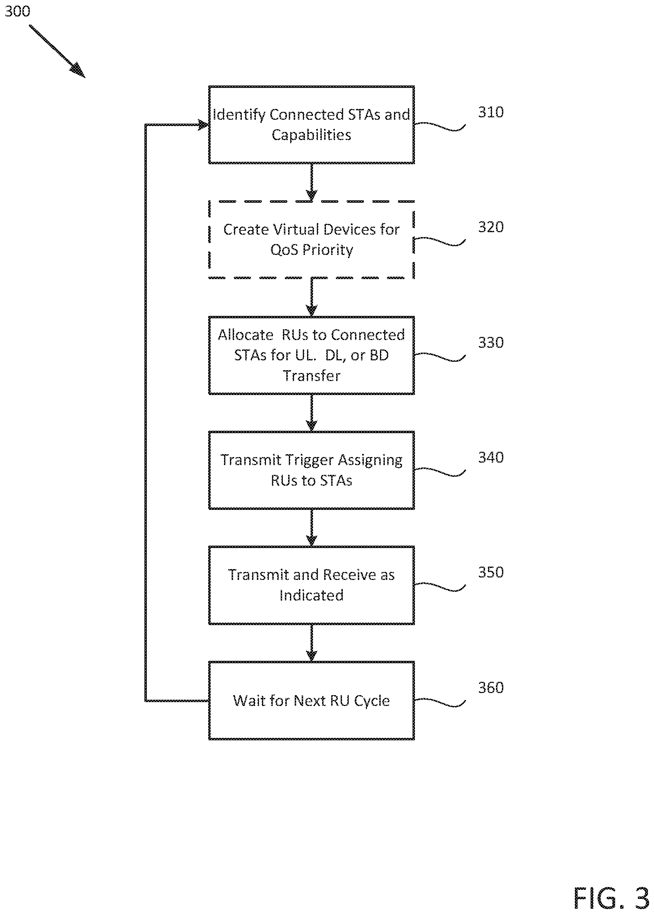

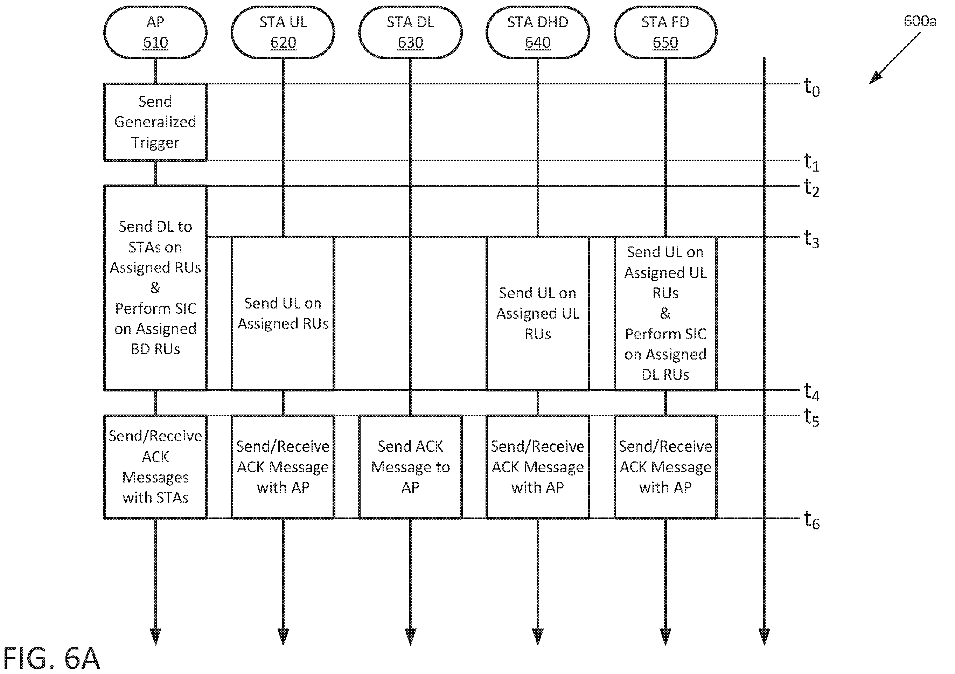

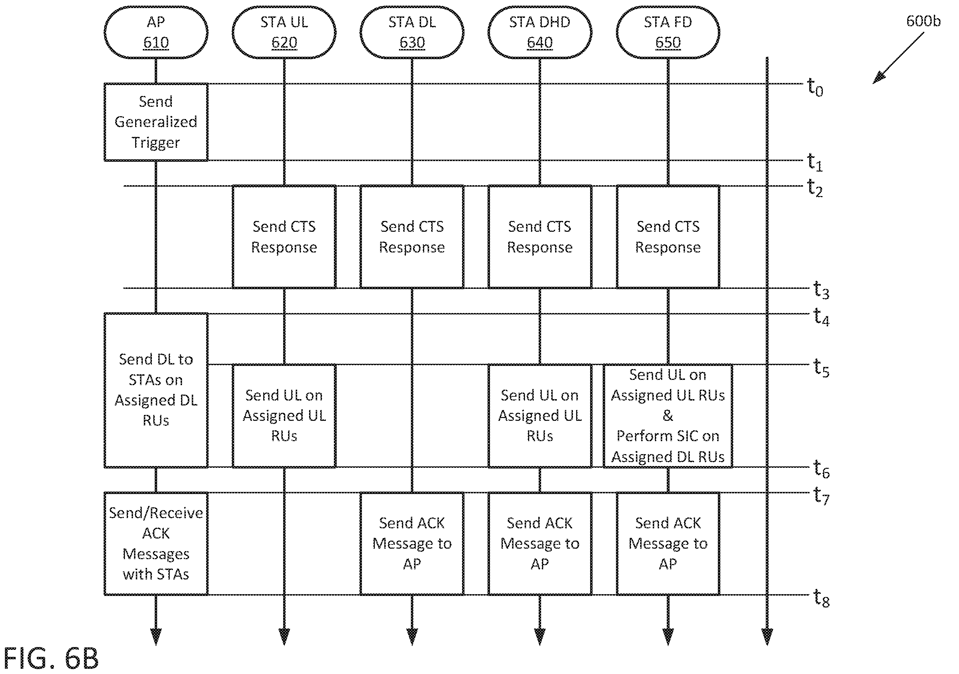

Figure 3 is a flowchart of a method 300 for an AP 110 to manage communications with STAs 120, according to embodiments of the present disclosure. Method 300 may be understood in conjunction with the AP timelines 610 in Figures 6A and 6B. Method 300 begins with block 310, where the AP 110 identifies STAs 120 served by the AP 110 and the capabilities of those STAs 120. In various embodiments, different connected STAs 120 may have more or fewer antennas, different processing speeds, different queue sizes in memory, run different versions of operating or application software, or have different user preferences that specify or define how the STA 120 is able to communicate with the AP 110. For example, the AP 110 may identify that *n* STA 120s are connected to the AP 110 for communication at a given time, and that *n-m* of those connected STAs 120 are capable of full-duplex communications in a given PPDU. As will be appreciated, the capabilities of a given STA 120 may vary across time (and PPDUs) as the signal to noise ratio (SNR), number of connected STAs 120, queue lengths associated with the given STA 120, etc. For example, a STA 120 with a low SNR may initially be identified as incapable of full-duplex communications, but when the SNR increases, may be re-identified as capable of full-duplex communications based on an SNR threshold.

At block 320, the AP 110 creates virtual STAs for scheduling Quality of Service (QoS) priorities for the connected STAs 120 capable of full-duplex communications. In various embodiments, certain communications or STAs 120 may be prioritized to improve the QoS for a given service or user. For example, real-time video protocols may be assigned an improved QoS relative to messages sent via another protocol, or an employee user STA 120 may be assigned QoS priority over a guest user STA 120. The virtual STAs are created for RU assignment in conjunction with scheduling communications with the actual device; effectively allowing a full-duplex capable STA 120 to be scheduled at twice the rate of UL/DL as a non-full-duplex capable device. When the STA 120 has a pending UL, the associated virtual STA is placed in queue to be scheduled for DL so that the full-duplex capable STA 120 can be scheduled for a DL RU and take advantage of that DL RU to upload QoS priority content (and vice versa). QoS assignment is discussed in greater detail in regard to Figure 7.

At block 330, the AP 110 allocates RUs in the given PPDU to the connected STAs 120 for UL, DL, or BD transfer of data between the AP 110 and the individual devices. A given STA 120 may be scheduled for an RU based on a communications backlog (e.g., a number of communications queued for transmission to or from the AP 110), a length of time since last communication, a number of competing STAs 120 for a given set of RUs within a time period, channel conditions, a promised speed of uplink/downlink, and the like, which the AP 110 balances to determine which STAs 120 are assigned one or more RUs within a given PPDU.

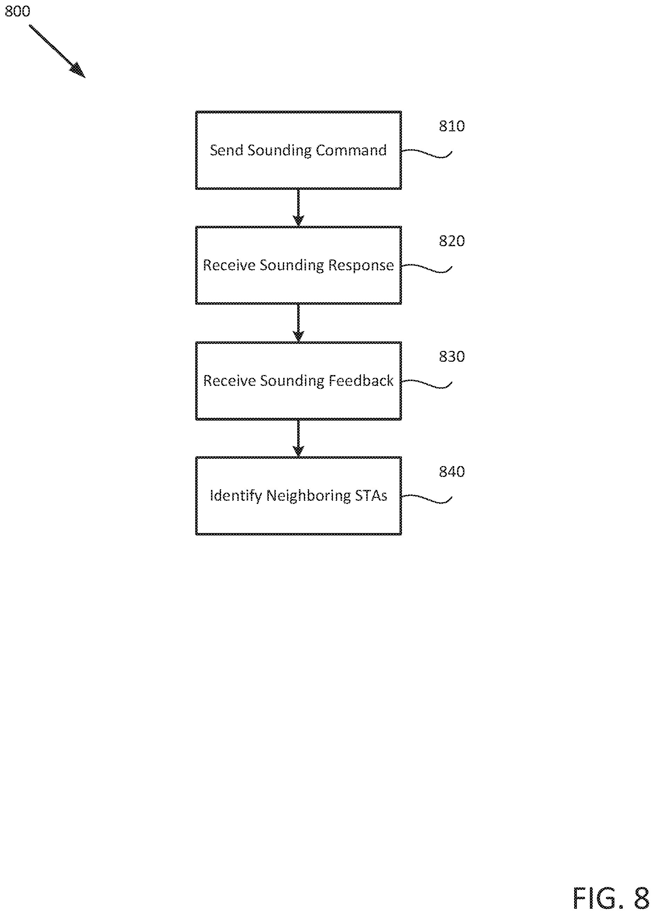

In various embodiments, the AP 110 determines which STAs 120 are assigned an RU on a particular frequency band to avoid assigning STAs 120 in physical proximity to one another RUs on adjacent or nearby frequency bands. For example, if a first STA 120a is assigned an RU in a frequency band of *a-b* MHz (Megahertz) and a second STA 120b is assigned an RU in a frequency band of b-c MHz, device impairments of various sorts may result in signal leakage and interference between the two STAs 120. Instead, the AP 110 may identify STAs 120 located within interfering distance of one another, such as is described in greater detail in regard to Figure 8, and assign neighboring STAs 120 non-neighboring RUs, using time or frequency distances to avoid interference between the neighboring devices.

At block 340, the AP 110 transmits a generalized trigger message (for example, basic trigger message of 802.11ax enhanced to indicate DL resource allocation in addition to UL resource allocation, or High Efficiency Signal-B (HE-SIG-B) of DL MU PPDU enhanced to carry UL resource allocation in addition to DL resource allocation), for the PPDU that indicates to the connected STAs 120 which RUs have been assigned to which devices for half duplex, dual-half duplex or full-duplex communication. The AP 110 transmits this generalized trigger message in the same way as a trigger message is sent in the 802.11ax systems. Within the present PPDU, the trigger is transmitted between time t₀ and t₁ according to the AP timeline 610 in Figures 6A and 6B.

At block 350, the AP 110 transmits DL messages to the STAs 120 assigned DL RUs and receives UL messages from the STAs 120 assigned UL RUs, including UL and/or DL messages received on BD RUs assigned to full-duplex devices. As illustrated in Figures 6A and 6B, the AP 110 begins transmitting DL messages to the connected STAs 120 before the connected STAs 120 begin transmitting (and the AP 110 begins to receive) the UL messages. The delay between transmission of DL and UL messages (e.g., Δ(t₂, t₃) in Figure 6A or Δ(t₄, t₅) in Figure 6B) is provided to reduce collisions within the preamble where legacy or non-full-duplex-capable STAs 120 learn which RUs are associated with DL traffic for those STAs 120, and to enable the AP 110 (and full-duplex capable STA 120) to initialize and perform Self Interference Cancellation (SIC) algorithms based on UL/DL transmissions carried on the same channel. For example, this delay could be equal to or greater than the time an STA 120 takes to process a field within the Physical Layer Convergence Procedure (PLCP) Protocol Data Unit (PDU) (a PLCP PDU may also be referred to as a PPDU), such as, for example, a High Efficiency Signal B (HE-SIG-B) field of a packet header defined in a wireless communications standard, such as, for example IEEE 802.11ax.

At block 360, the AP 110 performs PPDU conclusion activities, such as sending or receiving acknowledgement (ACK) messages (or a Block Acknowledgement (BA)), and waits for the appropriate IFS, such as an SIFS if the TXOP continues or a DIFS or AIFS if the TXOP does not continue. Method 300 may then return to block 310 for the AP 110 to identify the connected STAs 120 available and ready for communicating with the AP 110 and the capabilities of those devices.

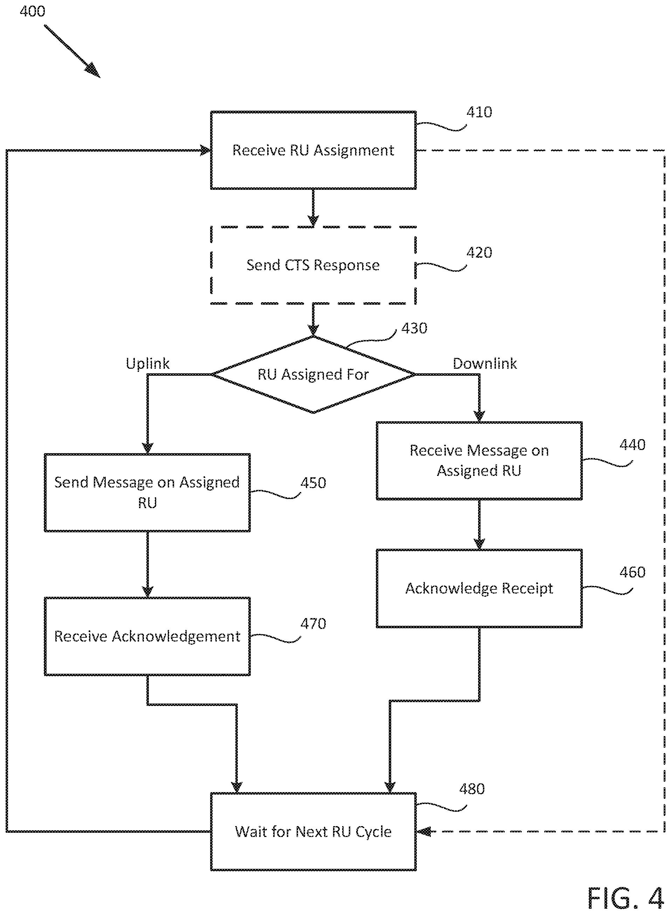

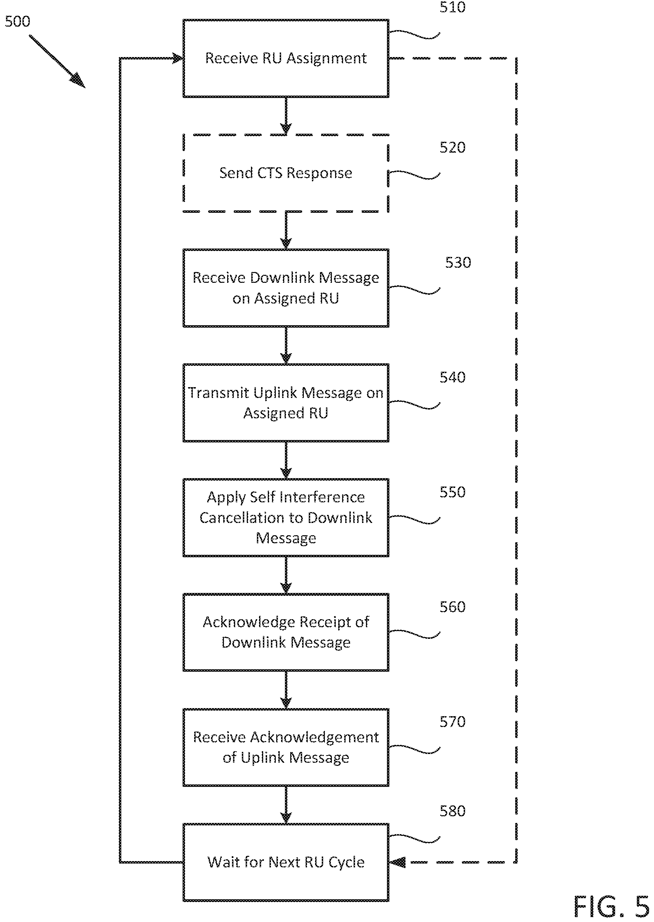

Figure 4 is a flowchart of a method 400 for half-duplex or dual-half-duplex communications from an STA 120 to an AP 110, according to embodiments of the present disclosure. Method 400 may be understood in conjunction with the uplink station timelines 620, downlink station timelines 630, and dual-half-duplex station timelines 640 in Figures 6A and 6B. Method 400 begins with block 410, where the STA 120 receives a generalized trigger, which may be any of the following: a 802.11ax trigger frame, a 802.11ax basic trigger frame enhanced to carry DL resource information in addition to UL resource information, a trigger frame according to a specification that carries UL and DL resource information, a generalized trigger frame, an HESIGB field, a generalized SIG field to schedule UL and/or DL transmissions and associated RU assignments. In various embodiments, the AP 110 can assign one or more RUs in a given PPDU to the STA 120, and the STA 120 may perform several instances of method 400 or method 500 (discussed in relation to Figure 5) in parallel depending on the assigned RUs. Within the present PPDU, the generalized-trigger received between time t₀ and t₁ according to the STA UL timeline 620, STA DL timeline 630, and STA HD timeline 640 in Figures 6A and 6B. If the STA 120 is not assigned an RU for the given PPDU, method 400 may proceed to block 480 to wait for the next PPDU.

At block 420, the STA 120 optionally sends a Clear To Send (CTS) message, (also referred to as a Clear to Transmit Signal) to the AP 110 (e.g., as per the IEEE 802.11ax specification). In some embodiments using a CTS message, the STA 120 sends the CTS message from times t₂-t₃ according to Figure 6B, in response to receiving and decoding a generalized-trigger in times t₀-t₁ that includes a Single Unit or Multiple Unit Ready To Send (RTS) message. Here, DL and UL resources can be decoded from the HE-SIG-B part of the PPDU that follows the CTS message where HE-SIG-B indicates UL resource allocation in addition to DL resource allocation. In various embodiments, the AP 110 may send second a supplemental trigger in response to receiving the CTS response (e.g., after time t₃ and before time t₄ or as a preamble or other field in the DL message sent from time t₄-t₅). In this embodiment, UL as well as DL resources can be assigned in this supplemental trigger message.

At block 430, the STA 120 determines whether the assigned RU is for uplink communications to the AP 110, or for downlink communications from the AP 110. When the STA 120 is assigned a DL RU, method 400 proceeds to block 440. When the STA is assigned an UL RU, method 400 proceeds to block 450. When the STA 120 is assigned at least one DL RU and at least one UL RU, method 400 proceeds to blocks 440 and 450 for the respective RUs. As illustrated in Figures 6A and 6B, although a given STA 120 may process blocks 440 and 450 in parallel, the STA 120 delays beginning to perform the actions in block 450 for a predefined amount of time after beginning to perform the actions in block 440.

At block 440, the STA 120 begins receiving the DL message on the assigned RU from the AP 110, and at block 460, when the DL message has been received from the AP 110, the STA 120 transmits a response to acknowledge receipt of the DL message. Method 400 proceeds to block 480 from block 460.

At block 450, the STA 120 begins sending the UL message on the assigned RU to the AP 110 (e.g., from time t₃-t₄ in Figure 6A and from time t₅-t₆ in Figure 6B). At block 470 the AP 110 transmits, and the STA 120 receives an ACK message for the receipt of the UL message. Method 400 proceeds to block 480 from block 470.

At block 480, the STA 120 waits for the next RU cycle (e.g., for a SIFS, a time gap where another type of transmission, such as for a legacy STA 120, can take place, and/or a subsequent TXOP), and method 400 returns to block 410 for the next PPDU to begin.

Figure 5 is a flowchart of a method 500 for full-duplex communications from an STA 120 to an AP 110, according to embodiments of the present disclosure. Method 500 may be understood in conjunction with the full-duplex station timelines 650 in Figures 6A and 6B. From the perspective of the AP 110, method 500 may occur substantially simultaneously (accounting for transmission delays) with method 400. Method 500 begins with block 510, where the STA 120 receives an RU assignment for a BD RU. In various embodiments, the AP 110 can assign one or more RUs in a given PPDU to the STA 120, and the STA 120 may perform several instances of method 400 (discussed in relation to Figure 4) or method 500 in parallel depending on the assigned RUs. Within the present PPDU, the trigger is received between time t₀ and t₁ according to the STA UL timeline 620, STA DL timeline 630, and STA HD timeline 640 in Figures 6A and 6B. If the STA 120 is not assigned an RU for the given PPDU, method 500 may proceed to block 580 to wait for the next PPDU.

At block 520, the STA 120 optionally sends a Clear To Send (CTS) message to the AP 110 (e.g., as per the IEEE 802.11ax specification). In some embodiments using a CTS message, the STA 120 sends the CTS message from times t₂-t₃ according to Figure 6B, in response to receiving and decoding a generalized-trigger in times t₀-t₁ that includes a Single Unit or Multiple Unit Ready To Send (RTS) message. In various embodiments, the AP 110 may send second a supplemental trigger in response to receiving the CTS response (e.g., after time t₃ and before time t₄ or as a preamble or other field in the DL message sent from time t₄-t₅). In various embodiments, the DL RUs are assigned in the HE-SIG-B part of HE MU PPDU or in the supplemental trigger, and the UL RUs are assigned in the supplemental trigger

At block 530, the STA 120 receives DL messages from the AP 110 on a given RU. In embodiments not using a CTS message (per block 520), the STA 120 receives the DL messages beginning at time t₂ according to Figure 6A. In embodiments using a CTS message, the STA 120 receives the DL messages beginning at time t₄ according to Figure 6B.

At block 540, the STA 120 transmits UL messages to the AP 110 on the same RU as which the DL messages are received per block 530. In embodiments not using a CTS message (per block 520), the STA 120 transmits the UL messages beginning at time t₃ according to Figure 6A. In embodiments using a CTS message, the STA 120 receives the DL messages beginning at time t₅ according to Figure 6B.

At block 550, the STA 120 applies a SIC protocol or algorithm to the received DL message to correct any interference introduced in the channel by transmitting the UL message in the same frequency band as the DL message. The STA 120 may apply SIC at or before beginning to transmit the UL message and may apply SIC until the DL message is fully received or the UL message is fully transmitted.

At block 560, the STA 120 after having completed transmission of the UL message and receipt of the DL message, transmit an ACK message to acknowledge receipt of the DL message to the AP 110. At block 570, the STA 120 receives acknowledgement of the receipt of the UL message by the AP 110.

At block 580, the STA 120 waits for the next RU cycle (e.g., for a SIFS), and method 500 returns to block 510 for the next PPDU to begin.

Figures 6A and 6B illustrate timing charts of various communications within a PPDU between APs 110 and STAs 120, according to embodiments of the present disclosure. Although the timing charts in Figures 6A and 6B include a different number to times tₓ, the timing charts may describe the same period of time, albeit with more or fewer divisions therein. Additionally, the illustrated distance between any two indicated times is not necessarily to scale of the distance indicated to another set of indicated times.

Figure 6A illustrates a first timing chart 600a running from time t₀ to time t₆ and including an AP timeline 610 indicating actions performed by an AP 110, an STA UL timeline 620 indicating actions performed by an STA 120 in UL mode 130b, an STA DL timeline 630 indicating actions performed by an STA 120 in DL mode 130a, an STA HD timeline 640 indicating actions performed by an STA 120 in dual-half-duplex mode 130c, and an STA FD timeline 650 indicating actions performed by an STA 120 in full-duplex mode 130d.

In the first timing chart 600a, the AP 110 sends a generalized trigger message from time t₀-t₁ indicating what (DL and/or UL) RUs have been assigned to the STAs 120. The AP 110 begins sending DL communications to the STAs 120 in DL, dual-half-duplex, or full-duplex modes 130 from time t₂-t₄ in the assigned RUs. At time t₃, after a delay of a predefined length from time t₂, the STAs 120 in UL, dual-half-duplex, and full-duplex modes 130 begin to send UL messages to the AP 110 in the assigned RUs. From time t₃-t₄, the STAs 120 in dual-half-duplex or full-duplex mode perform SIC on the received DL communications based on the UL messages transmitted by those STAs 120 in a shared BD RU, and the AP 110 may also perform SIC on received UL communications. From time t₅-t₆, the AP 110 and the STAs 120, regardless of communication mode 130 send acknowledgement messages for completion of the PPDU.

Figure 6B illustrates a second timing chart 600b running from time t₀ to time t₈ and including an AP timeline 610 indicating actions performed by an AP 110, an STA UL timeline 620 indicating actions performed by an STA 120 in UL mode 130b, an STA DL timeline 630 indicating actions performed by an STA 120 in DL mode 130a, an STA HD timeline 640 indicating actions performed by an STA 120 in dual-half-duplex mode 130c, and an STA FD timeline 650 indicating actions performed by an STA 120 in full-duplex mode 130d.

In the second timing chart 600b, the AP 110 sends a generalized trigger message from time t₀-t₁ requesting that the STAs 120 respond with a CTS response. In one embodiment, DL and UL resources assigned to various STAs 120 are indicated in the HE-SIG-B field of the HE MU PPDU whose transmission starts at t₄. After the STAs 120 respond with a CTS response at time t₂-t₃, the AP 110 may wait for a predefined time, (e.g., an SIFS from time t₃-t₄) before sending a DL communication to the STAs 120 from time t₄-t₆. In some embodiments, an initial portion of the DL communication (e.g., an HE Multi- User (MU) PPDU) includes DL RU allocation information for the STAs 120, while in other embodiments, the trigger message includes UL RU allocation information. When the DL RU allocation information is included in the initial portion of a DL communication, each STA 120 decodes the DL RU allocation information at time t₄-t₅, and determines whether any of the RUs have been assigned to that STA 120. In various embodiments, when one RU is allocated as both an UL RU (e.g., in the trigger message) and as a DL RU (e.g., in the HE MU PPDU), the STA 120 to which the shared RU is assigned may use the shared RU for full-duplex communications, UL communications, or DL communications, depending on the needs and queued communications on that STA 120. The AP 110 begins sending DL communications to the STAs 120 in DL, dual-half-duplex, or full-duplex modes 130 from time t₄-t₆ in the assigned RUs. At time ts, after a delay of a predefined length from time t₄, the STAs 120 in UL, dual-half-duplex, and full-duplex modes 130 begin to send UL messages to the AP 110 in the assigned RUs. From time t₅-t₆, the STAs 120 in full-duplex mode 130d perform SIC on the received DL communications based on the UL messages transmitted by those STAs 120 in a shared BD RU, and the AP 110 may also perform SIC on received UL communications. From time t₇-t₈, the AP 110 and the STAs 120 that received DL communications send acknowledgement messages for the received communications.

Figure 7 is a flowchart of a method 700 for QoS rescheduling via full-duplex communications, according to embodiments of the present disclosure. Method 700 begins with block 710, where the AP 110 identifies STA traffic with QoS priority outside of the UL/DL schedule for the AP 110. In some embodiments, an AP 110 may generally schedule UL and DL traffic in different time windows (e.g., ULs at time t₁, DL at time t₂, ULs at time t₃, etc.), but some STAs 120 may be entitled to send or receive QoS prioritized traffic outside of the general schedule - to send UL data during a DL period or to receive DL data during an UL period. In various embodiments, specific traffic may be entitled to QoS prioritization based on the application sending/receiving the traffic, the encapsulation format or type of the traffic (e.g., Transmission Control Protocol (TCP) versus User Datagram Protocol (UDP) traffic), the identity of the STA 120 (e.g., an employee STA 120 versus a guest STA 120 on a network), or the like.

At block 720, the AP 110 identifies whether a source/destination STA 120 for priority traffic is capable of full-duplex communications, and, if so, method 700 proceeds to block 730. If a STA 120 identified as a source or destination for QoS priority traffic is not capable of full-duplex communications, method 700 may end, and the AP 110 will attempt to prioritize communications for the prioritized traffic via one-directional RU communications (e.g., half-duplex or dual-half-duplex assignment of RUs).

At block 730, the AP 110 determines whether the QoS traffic is scheduled for uplink from the STA 120 or downlink to the STA 120.

When the QoS prioritized traffic is scheduled for uplink from the STA 120, method 700 proceeds to block 740, where the AP 110 creates a virtual STA corresponding to the STA 120 requesting uplink priority, where the virtual STA is placed in queue to request downlink priority. For example, consider a first STA 120a that has QoS priority UL data to second to the AP 110 and a second STA 120b that has QoS priority DL data to receive from the AP 110, both while the AP 110 is scheduled to run downlink scheduling and assign DL RUs. The AP 110 may schedule the second STA 120b as normal in downlink scheduling, but creates a virtual STA to represent the first STA 120a and schedules the virtual device as part of downlink scheduling with the other devices (actual or virtual) requesting DL RUs. The virtual STA may be assigned or not assigned an RU based on the relative scheduling priorities of all of the devices (virtual or actual) requesting a DL RU during downlink scheduling.

When the QoS prioritized traffic is scheduled for downlink to the STA 120, method 700 proceeds to block 750, where the AP 110 creates a virtual STA corresponding to the STA 120 requesting downlink priority, where the virtual STA is placed in queue to request uplink priority. For example, consider a first STA 120a that has QoS priority DL data to receive from the AP 110 and a second STA 120b that has QoS priority UL data to send to the AP 110, both while the AP 110 is scheduled to run uplink scheduling and assign UL RUs. The AP 110 may schedule the second STA 120b as normal in uplink scheduling, but creates a virtual STA to represent the first STA 120a and schedules the virtual STA as part of uplink scheduling with the other devices (actual or virtual) requesting UL RUs. The virtual STA may be assigned or not assigned an RU based on the relative scheduling priorities of all of the devices (virtual or actual) requesting an UL RU during uplink scheduling.

At block 760, the AP 110 determines whether an RU has been assigned to the virtual STA. If no RU was assigned to the virtual STA, method 700 may conclude. If an RU was assigned to the virtual STA, method 700 proceeds to block 770.

At block 770, the AP 110 assigns the RU assigned to the virtual STA to the associated STA 120 and treats the assigned RU as a full-duplex RU. For example, in a transmission scheme using a two-PPDU set in which RUs in the first PPDU are nominally scheduled for uplinks and RUs in the second PPDU are nominally scheduled for downlinks, a virtual STA can be assigned an UL RU in the first PPDU or a DL RU in the second PPDU. The STA 120 associated with the virtual STA then uses the assigned UL RU or DL RU as a BD RU; allowing the STA 120 to download during the first PPDU or upload during the second PPDU for QoS enhancement. As will be appreciated, in addition to the QoS prioritized traffic carried outside of the nominal direction of traffic, the STA 120 may also include any additional traffic in the nominal direction as part of the full-duplex communications offered by the BD RU.

Figure 8 is a flowchart of a method 800 for interference pathway identification for RU allocation, according to embodiments of the present disclosure. Method 800 begins at block 810, where the AP 110 issues a sounding command to the STA 120 within range of the AP 110. Each STA 120 that receives the sounding command within a predefined SNR threshold, power threshold (e.g., at least x Watts), or the like, responds to the sounding command indicating that the given STA 120 is in the operational range of the AP 110 that transmitted the sounding command.

At block 820, the AP 110 receives sounding responses from the STAs 120 within the operational range of the AP 110. The sounding responses may indicate a received power level and/or SNR of the sounding command as received by the associated STAs as well as other information identifying the STAs and the capabilities or locations thereof.

At block 830, the AP 110 receives sounding feedback from the STAs 120. In addition to the AP 110 receiving the sounding responses (per block 820), the STAs 120 may also receive the sounding responses transmitted back to the AP 110 from other STAs 120. Each STA 120 formats a sounding feedback that identifies the other STAs 120 whose sounding responses were received by the given STA 120 of at least a given SNR or power level, which defines a list of STAs 120 that neighbor the given STA 120. Each STA 120 transmits a list of the identities of the neighboring STAs 120 for the given STA 120 to the AP 110 in the sounding feedback.

At block 840, the AP 110 identifies which STAs 120 are neighbors or otherwise located in a signal path between one another and the AP 110 based on the received sounding feedback that identifies which STAs 120 were able to receive the sounding response from other STAs 120. Accordingly, the AP 110 determines that an interference pathway 140 would exist between the neighboring STAs 120 if adjacent RUs are used for full-duplex communications. Using the identification of the potential interference pathways 140, the AP 110 mitigates the risk of interference between two or more STAs 120 by either assigning non-neighboring RUs to the two or more STAs 120 or disabling full-duplex communications for at least one of the neighboring STAs 120 in a given PPDU.

For example, consider a first STA 120a and a second STA 120b that are both capable of full-duplex communications and are determined to be neighbors that are capable of causing interference on the transmitted or received signals of the other. The AP 110 in this example may assign RUs in a first PPDU such that only the first STA 120a is permitted to communicate in full-duplex mode 130d, and the second STA 120b is not assigned an RU or assigned RUs for half-duplex or dual-half-duplex communications during the first PPDU. The AP 110 may then assign RUs in a subsequent PPDU (i.e., at a later time) such that only the second STA 120b is permitted to communicate in full-duplex mode 130d, and the first STA 120a is not assigned an RU or assigned RUs for half-duplex or dual-half-duplex communications during the first PPDU. Alternatively, the AP 110 may assign both the first STA 120a and the second STA 120b RUs in the same PPDU that are separated by at least one intervening frequency band. For example, an AP 110 with RUs in three frequency bands of *a-b* MHz, *b-c* MHz, and *c-d* MHz can avoid assigning the middle frequency bands of *b-c* MHz to either the first STA 120a or the second STA 120b (e.g., not assigning that channel or assigning that channel to a third STA 120c) in the same PPDU, and thus mitigate the interference of the two neighboring STA 120 on one another for full-duplex communications in the frequency bands of *a-b* MHz and c-d MHz.

Method 800 may conclude after block 840, and the AP 110 may perform a subsequent iteration of method 800 based on one or more of an elapsed predefined period of time (e.g., every s seconds), in response to a new STA 120 connecting to the AP 110, in response to a STA 120 disconnecting from the AP 110 (e.g., a handoff to another AP 110, a logoff), in response to a predefined number of dropped or re-requested frame transmissions occurring within a time period, a user request, the location of a given STA 120 changing by a predefined distance, etc.

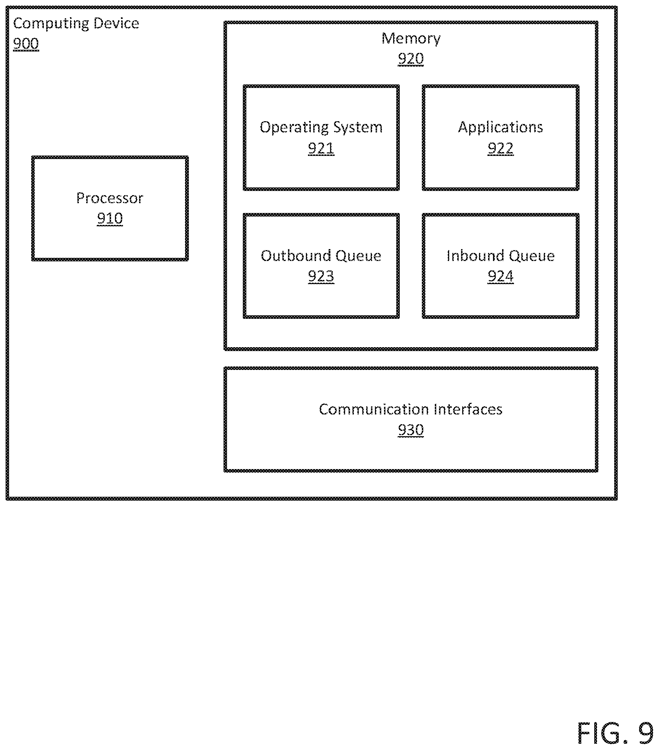

Figure 9 illustrates a computing device 900, as may be used as an AP or STA, according to embodiments of the present disclosure. The computing device 900 includes a processor 910, a memory 920, and communication interfaces 930. The processor 910 may be any processing element capable of performing the functions described herein. The processor 910 represents a single processor, multiple processors, a processor with multiple cores, and combinations thereof. The communication interfaces 930 facilitate communication between the computing device 900 and other devices. The communications interfaces 930 are representative of wireless communications antennas and various wired communication ports. The memory 920 may be either volatile or non-volatile memory and include RAM, flash, cache, disk drives, and other memory storage devices. Although shown as a single entity, the memory 920 may be divided into different memory storage elements such as RAM and one or more hard disk drives.

As shown, the memory 920 includes various instructions that are executable by the processor 910 to provide an operating system 921 to manage various functions of the computing device 900 and one or more applications 922 to provide various functionalities to users of the computing device 900, which include one or more of the functions and functionalities described in the present disclosure. Additionally, the memory 920 includes one or more outbound queues 923 containing data to be transmitted to other devices via the communication interfaces 930 and one or more inbound queues 924 that contain data received from other devices via the communication interfaces 930 and are being held for processing by the operating system 921 and/or the application 922.

In the current disclosure, reference is made to various embodiments. However, the scope of the present disclosure is not limited to specific described embodiments. Instead, any combination of the described features and elements, whether related to different embodiments or not, is contemplated to implement and practice contemplated embodiments. Additionally, when elements of the embodiments are described in the form of "at least one of A and B," it will be understood that embodiments including element A exclusively, including element B exclusively, and including element A and B are each contemplated. Furthermore, although some embodiments disclosed herein may achieve advantages over other possible solutions or over the prior art, whether or not a particular advantage is achieved by a given embodiment is not limiting of the scope of the present disclosure. Thus, the aspects, features, embodiments and advantages disclosed herein are merely illustrative and are not considered elements or limitations of the appended claims except where explicitly recited in a claim(s). Likewise, reference to "the invention" shall not be construed as a generalization of any inventive subject matter disclosed herein and shall not be considered to be an element or limitation of the appended claims except where explicitly recited in a claim(s).

As will be appreciated by one skilled in the art, the embodiments disclosed herein may be embodied as a system, method or computer program product. Accordingly, embodiments may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, embodiments may take the form of a computer program product embodied in one or more computer readable medium(s) having computer readable program code embodied thereon.

Program code embodied on a computer readable medium may be transmitted using any appropriate medium, including but not limited to wireless, wireline, optical fiber cable, RF, etc., or any suitable combination of the foregoing.

Computer program code for carrying out operations for embodiments of the present disclosure may be written in any combination of one or more programming languages, including an object oriented programming language such as Java, Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the present disclosure are described herein with reference to flowchart illustrations and/or block diagrams of methods, apparatuses (systems), and computer program products according to embodiments presented in this disclosure. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the block(s) of the flowchart illustrations and/or block diagrams.

These computer program instructions may also be stored in a computer readable medium that can direct a computer, other programmable data processing apparatus, or other device to function in a particular manner, such that the instructions stored in the computer readable medium produce an article of manufacture including instructions which implement the function/act specified in the block(s) of the flowchart illustrations and/or block diagrams.

The computer program instructions may also be loaded onto a computer, other programmable data processing apparatus, or other device to cause a series of operational steps to be performed on the computer, other programmable apparatus or other device to produce a computer implemented process such that the instructions which execute on the computer, other programmable data processing apparatus, or other device provide processes for implementing the functions/acts specified in the block(s) of the flowchart illustrations and/or block diagrams.

The flowchart illustrations and block diagrams in the Figures illustrate the architecture, functionality, and operation of possible implementations of systems, methods, and computer program products according to various embodiments. In this regard, each block in the flowchart illustrations or block diagrams may represent a module, segment, or portion of code, which comprises one or more executable instructions for implementing the specified logical function(s). It should also be noted that, in some alternative implementations, the functions noted in the block may occur out of the order noted in the Figures. For example, two blocks shown in succession may, in fact, be executed substantially concurrently, or the blocks may sometimes be executed in the reverse order, depending upon the functionality involved. It will also be noted that each block of the block diagrams and/or flowchart illustrations, and combinations of blocks in the block diagrams and/or flowchart illustrations, can be implemented by special purpose hardware-based systems that perform the specified functions or acts, or combinations of special purpose hardware and computer instructions.

In view of the foregoing, the scope of the present disclosure is determined by the claims that follow.

## Claims

1. A method, comprising:
identifying (310) traffic with Quality of Service, QoS, priority for a first station, STA, 120a of a plurality connected STAs;
in response to determining that the first STA is capable of full-duplex communication, creating (320) a virtual STA device associated with the first STA;
allocating (330) a plurality of Resource Units, RU, to the plurality of connected STAs based on communications capabilities and traffic requests corresponding to the plurality of connected STAs, wherein a first RU of the plurality of RUs is allocated to a first STA of the plurality of connected STAs as a downlink, DL, RU, and a second RU of the plurality of RUs is allocated to the virtual device as an uplink, UL, RU;
re-assigning the second RU from the virtual device to the first STA as a bidirectional, BD, RU for full-duplex communications with the first STA;
transmitting (340) a generalized-trigger to the plurality of connected STAs to assign the plurality of RUs;
transmitting (350) downlink, DL, communications on DL RUs of the plurality RUs and the second RU; and
receiving (350) uplink, UL, communications on UL RUs of the plurality of RUs and the second RU.

2. The method of claim 1 , wherein the UL RUs of the plurality of RUs are delayed by a predefined amount of time relative to the DL RUs of the plurality of RUs.

3. The method of claim 1 or claim 2, further comprising:
performing self interference cancellation on a first UL communication received via the BD RU based on a first DL message transmitted to the first STA on the BD RU.

4. The method of any preceding claim, wherein allocating the plurality of RUs further comprises:
identifying an interference path between the first STA and a second STA of the connected
STAs via a sounding feedback from the first STA identifying the second STA; and
allocating the plurality of RUs to the connected STAs such that the BD RU allocated to the first STA and a second BD RU allocated to the second STA are in non-neighboring frequency bands.

5. The method of any preceding claim, wherein allocating the plurality of RUs to the connected STAs based on the communications capabilities and traffic requests further comprises:
allocating a second RU of the plurality of RUs to a second STA of the plurality of connected STAs for a half-duplex communication with the second STA.

6. The method of any of claims 1 to 5, wherein allocating the plurality of RUs to the connected STAs based on the communications capabilities and traffic requests further comprises:
allocating a second RU and a third RU of the plurality of RUs to a second STA of the plurality of connected STAs,
wherein the second RU and third RU are in different frequency bands, for a dual-half-duplex communication with the second STA.

7. The method of any preceding claim, further comprising: between transmitting the generalized-trigger and transmitting the DL communications, receiving a Clear to Transmit Signal from the plurality of connected STAs.

8. The method of any preceding claim, further comprising: receiving acknowledgement messages from connected STAs of the plurality of STAs to which DL communications were transmitted.

9. A computer readable storage medium, including instructions that, when performed by a processor of a computing device, cause the computing device to:
identify traffic with Quality of Service, QoS, priority for a first station, STA, 120a of a plurality connected STAs;
in response to determining that the first STA is capable of full-duplex communication, create a virtual STA device associated with the first STA;
allocate a plurality of Resource Units, RU, to the plurality of connected Stations, STAs, based on communications capabilities and traffic requests corresponding to the plurality of connected STAs, wherein a first RU of the plurality of RUs is allocated to a first STA of the plurality of connected STAs as a downlink, DL, RU, and a second RU of the plurality of RUs is allocated to the virtual device as an uplink, UL, RU;
re-assign the second RU from the virtual device to the first STA for use as a bidirectional, BD, RU for full- duplex communications with the first STA;
transmit a generalized-trigger to the plurality of connected STAs to assign the plurality of RUs;
transmit downlink, DL, communications on DL RUs of the plurality RUs and the second RU;
and receive uplink, ,UL, communications on UL RUs of the plurality of RUs and the second RU.

10. The computer readable storage medium of claim 9, wherein the UL RUs of the plurality of RUs are delayed by a predefined amount of time relative to the DL RUs of the plurality of RUs.

11. The computer readable storage medium of claim 9 or claim 10, wherein the instructions, when performed, further cause the computing device to:
perform self interference cancellation on a first UL communication received via the BD RU based on a first DL message transmitted to the first STA on the BD RU.

12. The computer readable storage medium of any of claims 9 to 11, wherein, to allocate the plurality or RUs, the instructions, when performed, further cause the computing device to:
identify an interference path between the first STA and a second STA of the connected STAs via a sounding feedback from the first STA identifying the second STA; and
allocate the plurality of RUs to the connected STAs such that the BD RU allocated to the first STA and a second BD RU allocated to the second STA are in non-neighboring frequency bands.

13. The computer readable storage medium of any of claims 9 to 12, wherein, to allocate the plurality of RUs to the connected STAs based on the communications capabilities and traffic requests, the instructions, when performed, further cause the computing device to:
allocate a second RU and a third RU of the plurality of RUs to a second STA of the plurality of connected STAs,
wherein the second RU and third RU are in different frequency bands, for a dual-half-duplex communication with the second STA.

## Patentansprüche

1. Ein Verfahren, aufweisend:
Ermitteln (310) von Datenverkehr mit Quality of Service, QoS, -Priorität für eine erste Station, STA, 120a einer Mehrzahl verbundener STAs;
Als Reaktion auf die Feststellung, dass die erste STA zu Vollduplex-Kommunikation fähig ist, Erstellen (320) eines virtuellen STA-Geräts, das der ersten STA zugeordnet ist;
Zuteilen (330) einer Mehrzahl von Ressourceneinheiten, Rus, an die Mehrzahl verbundener STAs basierend auf den Kommunikationsfähigkeiten und Datenverkehrsanfragen, die der Mehrzahl verbundener STAs entsprechen, wobei eine erste RU der Mehrzahl von RUs einer ersten STA der Mehrzahl verbundener STAs als Downlink-DL, RU zugeteilt wird und eine zweite RU der Mehrzahl von RUs dem virtuellen Gerät als Uplink, UL, RU zugeteilt wird;
Erneutes Zuweisen der zweiten RU vom virtuellen Gerät an die erste STA als eine bidirektionale, BD, RU für Vollduplex-Kommunikation mit der ersten STA;
Senden (340) eines generalisierten Triggers an die Mehrzahl verbundener STAs, um die Mehrzahl von RUs zuzuweisen;
Senden (350) von Downlink, DL, Kommunikation auf den DL-RUs der Mehrzahl von RUs sowie auf der zweiten RU; und
Empfangen (350) von Uplink-(UL-)Kommunikation auf den UL-RUs der Mehrzahl von RUs sowie auf der zweiten RU.

2. Das Verfahren nach Anspruch 1, wobei die UL-RUs der Mehrzahl von RUs gegenüber den DL-RUs der Mehrzahl von RUs um eine vordefinierte Zeitspanne verzögert sind.

3. Das Verfahren nach Anspruch 1 oder 2, ferner aufweisend:
Durchführen einer Eigeninterferenzunterdrückung an einer ersten UL-Kommunikation, die über die BD-RU empfangen wird, basierend auf einer ersten DL-Nachricht, die an die erste STA über die BD-RU gesendet wurde.

4. Das Verfahren nach einem der vorstehenden Ansprüche, wobei das Zuteilen der Mehrzahl von RUs ferner aufweist:
Ermitteln eines Interferenzpfads zwischen der ersten STA und einer zweiten STA der verbundenen STAs über ein Sounding-Feedback von der ersten STA, das die zweite STA identifiziert; und
Zuteilen der Mehrzahl von RUs an die verbundenen STAs derart, dass die der ersten STA zugeteilte BD-RU und eine der zweiten STA zugeteilte zweite BD-RU sich in nicht benachbarten Frequenzbändern befinden.

5. Das Verfahren nach einem der vorstehenden Ansprüche, wobei das Zuteilen der Mehrzahl von RUs an die verbundenen STAs basierend auf den Kommunikationsfähigkeiten und Datenverkehrsanfragen ferner aufweist:
Zuteilen einer zweiten RU der Mehrzahl von RUs an eine zweite STA der Mehrzahl verbundener STAs für eine Halbduplex-Kommunikation mit der zweiten STA.

6. Das Verfahren nach einem der Ansprüche 1 bis **5,** wobei das Zuteilen der Mehrzahl von RUs an die verbundenen STAs basierend auf den Kommunikationsfähigkeiten und Datenverkehrsanfragen ferner aufweist:
Zuteilen einer zweiten RU und einer dritten RU der Mehrzahl von RUs an eine zweite STA der Mehrzahl verbundener STAs,
wobei sich die zweite RU und die dritte RU in unterschiedlichen Frequenzbändern befinden, für eine Dual-Halbduplex-Kommunikation mit der zweiten STA.

7. Das Verfahren nach einem der vorstehenden Ansprüche, ferner aufweisend:
Zwischen dem Senden des generalisierten Triggers und dem Senden der DL-Kommunikation Empfangen eines Clear-to-Transmit-Signals von der Mehrzahl verbundener STAs.

8. Das Verfahren nach einem der vorstehenden Ansprüche, ferner aufweisend:
Empfangen von Bestätigungsnachrichten von verbundenen STAs der Mehrzahl von STAs, an welche DL-Kommunikationen gesendet wurden.

9. Ein computerlesbares Speichermedium, aufweisend Anweisungen, die, wenn sie von einem Prozessor eines Rechengeräts ausgeführt werden, das Rechengerät dazu veranlassen, Folgendes durchzuführen:
Ermitteln von Datenverkehr mit Quality of Service, QoS, - Priorität für eine erste Station, STA, 120a einer Mehrzahl verbundener STAs;
Als Reaktion auf die Feststellung, dass die erste STA zu Vollduplex-Kommunikation fähig ist, Erstellen eines virtuellen STA-Geräts, das der ersten STA zugeordnet ist;
Zuteilen einer Mehrzahl von Ressourceneinheiten, RU, an die Mehrzahl verbundener Stationen, STAs, basierend auf den Kommunikationsfähigkeiten und Datenverkehrsanfragen, die der Mehrzahl verbundener STAs entsprechen, wobei eine erste RU der Mehrzahl von RUs einer ersten STA der Mehrzahl verbundener STAs als Downlink, DL, RU zugeteilt wird und eine zweite RU der Mehrzahl von RUs dem virtuellen Gerät als Uplink, UL, RU zugeteilt wird;
Neuerliches Zuweisen der zweiten RU vom virtuellen Gerät an die erste STA zur Verwendung als bidirektionale, BD, RU für Vollduplex-Kommunikation mit der ersten STA;
Senden eines generalisierten Triggers an die Mehrzahl verbundener STAs, um die Mehrzahl von RUs zuzuweisen;
Senden von Downlink, DL, Kommunikation auf den DL-RUs der Mehrzahl von RUs sowie auf der zweiten RU; und
Empfangen von Uplink, UL, Kommunikation auf den UL-RUs der Mehrzahl von RUs sowie auf der zweiten RU.

10. Das computerlesbare Speichermedium nach Anspruch 9, wobei die UL-RUs der Mehrzahl von RUs gegenüber den DL-RUs der Mehrzahl von RUs um eine vordefinierte Zeitspanne verzögert sind.

11. Das computerlesbare Speichermedium nach Anspruch 9 oder 10, wobei die Anweisungen, wenn sie ausgeführt werden, das Rechengerät ferner dazu veranlassen, Folgendes durchzuführen:
Durchführen einer Eigeninterferenzunterdrückung an einer ersten über die BD-RU empfangenen UL-Kommunikation basierend auf einer ersten DL-Nachricht, die an die erste STA über die BD-RU gesendet wurde.

12. Das computerlesbare Speichermedium nach einem der Ansprüche 9 bis 11, wobei zum Zuteilen der Mehrzahl von RUs die Anweisungen, wenn sie ausgeführt werden, das Rechengerät ferner dazu veranlassen, Folgendes durchzuführen:
Ermitteln eines Interferenzpfads zwischen der ersten STA und einer zweiten STA der verbundenen STAs über ein Sounding-Feedback von der ersten STA, das die zweite STA identifiziert; und
Zuteilen der Mehrzahl von RUs an die verbundenen STAs derart, dass die der ersten STA zugeteilte BD-RU und eine der zweiten STA zugeteilte zweite BD-RU in nicht benachbarten Frequenzbändern liegen.

13. Das computerlesbare Speichermedium nach einem der Ansprüche 9 bis 12, wobei zum Zuteilen der Mehrzahl von RUs an die verbundenen STAs basierend auf den Kommunikationsfähigkeiten und den Datenverkehrsanfragen die Anweisungen, wenn sie ausgeführt werden, das Rechengerät ferner dazu veranlassen, Folgendes durchzuführen:
Zuteilen einer zweiten RU und einer dritten RU der Mehrzahl von RUs an eine zweite STA der Mehrzahl verbundener STAs,
wobei sich die zweite RU und die dritte RU in unterschiedlichen Frequenzbändern befinden, für eine Dual-Halbduplex-Kommunikation mit der zweiten STA.

## Revendications

1. Procédé comprenant le fait :
d'identifier (310) le trafic avec la qualité de service, QoS, priorité pour une première station, STA, 120a parmi une pluralité de STA connectées ;
en réponse à la détermination du fait que la première STA est capable d'une communication en duplex intégral, ledit procédé comprend le fait de créer (320) un dispositif STA virtuel associé à la première STA ;
d'attribuer (330) une pluralité d'unités de ressources, RU, à la pluralité de STA connectées, en se basant sur des capacités de communications et sur des demandes de trafic correspondant à la pluralité de STA connectées, procédé dans lequel une première RU parmi la pluralité de RU est attribuée à une première STA parmi la pluralité de STA connectées, comme une RU de liaison descendante, DL, et une deuxième RU parmi la pluralité de RU est attribuée au dispositif virtuel comme une RU de liaison montante, UL ;
de réattribuer la deuxième RU du dispositif virtuel, à la première STA, comme une RU bidirectionnelle, BD, pour des communications en duplex intégral avec la première STA ;
de transmettre (340) un déclencheur généralisé à la pluralité de STA connectées, afin d'attribuer la pluralité de RU ;
de transmettre (350) des communications de liaison descendante, DL, sur des RU DL parmi la pluralité de RU et sur la deuxième RU ; et
de recevoir (350) des communications de liaison montante, UL, sur des RU UL parmi la pluralité de RU et sur la deuxième RU.

2. Procédé selon la revendication 1, dans lequel les RU UL parmi la pluralité de RU sont retardées par un laps de temps prédéfini par rapport aux RU DL de la pluralité de RU.

3. Procédé selon la revendication 1 ou la revendication 2, comprenant en outre le fait :
d'effectuer une annulation d'auto-interférence sur une première communication UL reçue via la RU BD, sur la base d'un premier message DL transmis à la première STA sur la RU BD.

4. Procédé selon l'une quelconque des revendications précédentes, dans lequel l'attribution de la pluralité de RU comprend en outre :
l'identification d'un chemin d'interférence entre la première STA et une deuxième STA parmi les STA connectées,
via un retour sonore provenant de la première STA identifiant la deuxième STA ; et
l'attribution de la pluralité de RU aux STA connectées, de manière telle que la RU BD attribuée à la première STA et
une deuxième RU BD attribuée à la deuxième STA soient dans des bandes de fréquences non voisines.

5. Procédé selon l'une quelconque des revendications précédentes, dans lequel l'attribution de la pluralité de RU aux STA connectées, en se basant sur les capacités de communications et sur les demandes de trafic, comprend en outre :
l'attribution d'une deuxième RU de la pluralité de RU, à une deuxième STA parmi la pluralité de STA connectées, pour une communication en semi-duplex avec la deuxième STA.

6. Procédé selon l'une quelconque des revendications 1 à 5, dans lequel l'attribution de la pluralité de RU aux STA connectées, en se basant sur les capacités de communications et sur les demandes de trafic, comprend en outre :
l'attribution d'une deuxième RU et d'une troisième RU de la pluralité de RU, à une deuxième STA de la pluralité de STA connectées,
procédé dans lequel la deuxième RU et la troisième RU sont dans des bandes de fréquences différentes, pour une communication double en semi-duplex avec la deuxième STA.

7. Procédé selon l'une quelconque des revendications précédentes, comprenant en outre : entre la transmission du déclencheur généralisé et la transmission des communications DL, la réception d'un signal d'autorisation de transmettre provenant de la pluralité de STA connectées.

8. Procédé selon l'une quelconque des revendications précédentes, comprenant en outre : le fait de recevoir des messages d'accusé de réception provenant de STA connectées de la pluralité de STA auxquelles les communications DL ont été transmises.

9. Support de stockage lisible par ordinateur, ledit support comprenant des instructions qui, lorsqu'elles sont mises en œuvre par un processeur d'un dispositif informatique, amènent le dispositif informatique :
à identifier le trafic avec la qualité de service, QoS, priorité pour une première station, STA, 120a parmi une pluralité de STA connectées ;
en réponse à la détermination du fait que la première STA est capable d'une communication en duplex intégral, le dispositif informatique permet de créer un dispositif STA virtuel associé à la première STA ;
ledit dispositif informatique permettant :
d'attribuer une pluralité d'unités de ressources, RU, à la pluralité de STA connectées, en se basant sur des capacités de communications et sur des demandes de trafic correspondant à la pluralité de STA connectées, où une première RU parmi la pluralité de RU est attribuée à une première STA parmi la pluralité de STA connectées, comme une RU de liaison descendante, DL, et une deuxième RU parmi la pluralité de RU est attribuée au dispositif virtuel comme une RU de liaison montante, UL ;
de réattribuer la deuxième RU du dispositif virtuel, à la première STA, pour une utilisation comme une RU bidirectionnelle, BD, pour des communications en duplex intégral avec la première STA ;
de transmettre un déclencheur généralisé à la pluralité de STA connectées, afin d'attribuer la pluralité de RU ;
de transmettre des communications de liaison descendante, DL, sur des RU DL parmi la pluralité de RU et sur la deuxième RU ; et
de recevoir des communications de liaison montante, UL, sur des RU UL parmi la pluralité de RU et sur la deuxième RU.

10. Support de stockage lisible par ordinateur selon la revendication 9, dans lequel les RU UL parmi la pluralité de RU sont retardées par un laps de temps prédéfini par rapport aux RU DL de la pluralité de RU.

11. Support de stockage lisible par ordinateur selon la revendication 9 ou la revendication 10, dans lequel les instructions, lorsqu'elles sont mises en œuvre, amènent en outre le dispositif informatique :
à effectuer une annulation d'auto-interférence sur une première communication UL reçue via la RU BD, sur la base d'un premier message DL transmis à la première STA sur la RU BD.

12. Support de stockage lisible par ordinateur selon l'une quelconque des revendications 9 à 11, dans lequel, pour attribuer la pluralité de RU, les instructions, lorsqu'elles sont mises en œuvre, amènent en outre le dispositif informatique :
à identifier un chemin d'interférence entre la première STA et une deuxième STA parmi les STA connectées, via un retour sonore provenant de la première STA identifiant la deuxième STA ; et
à attribuer la pluralité de RU aux STA connectées, de manière telle que la RU BD attribuée à la première STA et une deuxième RU BD attribuée à la deuxième STA soient dans des bandes de fréquences non voisines.

13. Support de stockage lisible par ordinateur selon l'une quelconque des revendications 9 à 12, dans lequel, pour attribuer la pluralité de RU aux STA connectées, en se basant sur les capacités de communications et sur les demandes de trafic, les instructions, lorsqu'elles sont mises en œuvre, amènent en outre le dispositif informatique :
à attribuer une deuxième RU et une troisième RU de la pluralité de RU, à une deuxième STA de la pluralité de STA connectées,
support de stockage dans lequel la deuxième RU et la troisième RU sont dans des bandes de fréquences différentes, pour une communication double en semi-duplex avec la deuxième STA.
